# EUROPEAN PATENT APPLICATION

(11) **EP 1 107 415 A2**
(43) Date of publication of application: **13.06.2001**
(21) Application number: 00310651.5
(22) Date of filing: 30.11.2000
(51) Int. Cl.: H02H 3/33, H02H 1/04

(54) **Residual current breaker**

(30) Priority: 30.11.1999 CN 99122848
(71) Applicant: GE Clipsal China Company, Ltd., 200355 Huizhou (CN)
(72) Inventor: Yuen, Edmund C.L., Huizhou, Guangdon 516001 (CN); Chen, Zhi-Li, Huizhou, Guangdon 516001 (CN); Wang, Xue-Jun, Huizhou, Guangdon 516001 (CN)
(74) Representative: Goode, Ian Roy

(57) **Abstract**

The present invention relates to a residual current breaker in which an unbalanced current supplied to a load circuit ( 3) by a power supply (1) is detected and a control circuit (24) is provided to activate a tripping mechanism (21) to disconnect the supply voltage to the load circuit. A voltage stabilizing circuit (23) is provided so as to generate a voltage drop in case of a surge voltage of the power supply, such that the surge voltage is not passed to the control circuit. Thus, the supply voltage of the control circuit is maintained to thereby prevent damage of the control circuit and unwanted tripping.

## Description

The present invention relates to a residual current breaker for a residential circuit device used to provide a protection against indirect contact, direct contact and fire.

The basic operation of residual current devices (RCDs) is to detect an unbalanced current supplied to a loading circuit, by a zero current transformer (ZCT). If the value of the unbalanced current detected by the ZCT is higher than a predetermined value, an electronic control circuit activates a tripping mechanism provided for disconnecting a supply voltage to the load circuit.

Due to their lower costs, electronic control circuits are a feasible alternative to conventional electromagnetic control and activating circuits. The electronic RCD offers ideal protection, especially where high sensitivity is required (30 mA) in a high-current device.

However, common problems in electronic types of control are noise immunity and protection against voltage failures in three-phase systems, which may lead to undesired activation of the tripping mechanism.

In conventional low cost electronic RCDs, the circuitry is simplified and the number of components is reduced by directly driving a solenoid of the tripping mechanism by an activating circuit comprising a thyristor (SCR) in order to trip the power supply to the load circuit. Such a design leads to the drawback of low noise immunity, especially in cases of surge voltages with low source impedance. According to IEC 1543 requirements, the surge voltage is 4kV 1.2/50µs with a source impedance of 2Ω in the differential mode.

A typical method to suppress surge voltages is to use a varistor. However, the impedance of the varistor is high compared to the specified source impedance of the surge equipment. As a result, the voltage at the varistor will be high, close to 1,000V, and will pass to the control circuit, causing damage or unwanted tripping.

Moreover, a failure in the neutral line or one of the supply phase lines of a three-phase system will lead to a drop of the supply voltage to the control circuit, such that the RCD may not properly function.

It is therefore an object of the present invention to provide a residual current breaker having an improved noise immunity and protection against voltage failures in three-phase systems.

This object is achieved by a residual current breaker comprising:
a tripping mechanism for disconnecting a power supply from a load circuit; a zero current transformer or detecting an unbalanced current to the load circuit;
a control circuit for activating the tripping mechanism in response to the detection result of the zero current transformer; and
a voltage stabilizing circuit arranged between the power supply and the control circuit, for maintaining a level of a voltage supplied from the power supply to the control circuit within a predetermined range.

Accordingly, the voltage stabilizing circuit arranged between the power supply and the control circuit serves to attenuate the surge voltage before reaching the control circuit. Thereby, the EMC part of the IEC standard 1009-1 can be met especially with respect to the surge test to simulate lightning.

Preferably, the voltage stabilizing circuit may comprise a serial connection of a resistor and a varistor, wherein the voltage supplied to the control circuit is generated across the varistor. As the surge voltage rises across the varistor, an increased current flows through the serial resistor, leading to a voltage drop across the resistor to maintain the low voltage across the varistor, which is supplied to the control circuit of the RCD. Thereby, damage of the control circuit and unwanted tripping can be prevented.

Additionally, in case of a three-phase power supply system, the voltage stabilizing circuit may comprise a three-phase rectifying circuit. By using the three-phase rectifying circuit in the three-phase RCD, an adequate DC level is provided to operate the control circuit even in case of a voltage failure in one of the phases. Moreover, as the supply voltage is provided by all three phase wires, a failure of the neutral wire has no effect on the performance of the control circuit.

In the three-phase system, the serial connection is preferably provided for each phase of the three-phase power supply, wherein the voltage generated across the varistor is supplied to a respective input of the three-phase rectifying circuit.

Preferably, the resistor of the serial connection is a wire-wound resistor.

Furthermore, the residual current breaker may be a residential current device, and the control circuit may be an earth leakage current detector. The tripping mechanism may be a solenoid activated by the control circuit via a thyristor (SCR).

An embodiment of the invention will now be described, by way of example, with reference to the accompanying drawings, in which:
Fig. 1 shows a basic block diagram of a residual current breaker according to an embodiment of the present invention;
Fig. 2 shows an exemplary circuit diagram of the embodiment of the present invention in a two-phase system; and
Fig. 3 shows an exemplary circuit diagram of the embodiment of tae present invention in a three-phase system.

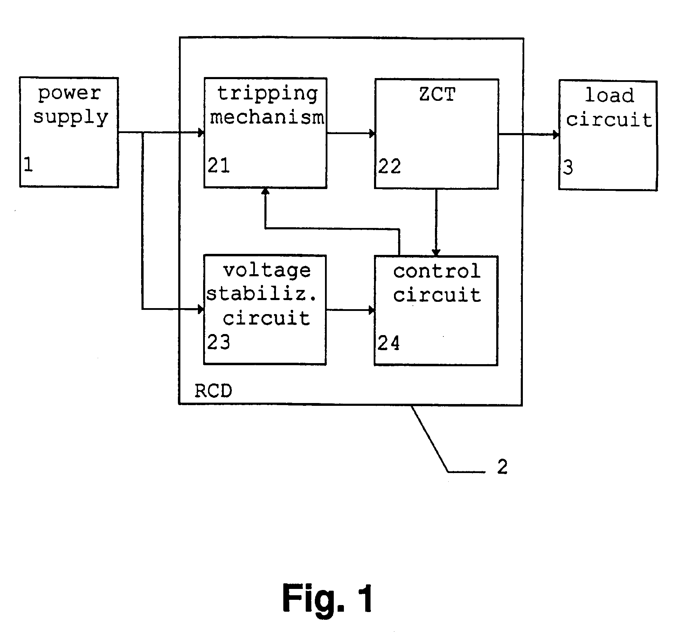

Fig. 1 shows a basic block diagram of an embodiment of the present invention. According to Fig. 1, a residual current breaker such as a residual current device (RCD) is arranged between a two- or three-phase power supply 1 and a load circuit 3. The load circuit 3 represents any residential load or loads connected to the two- or three-phase power supply 1.

The RCD 2 comprises a tripping mechanism 21 whi.ch may comprise a solenoid activated by a thyristor means, e.g. an SCR or any other suitable electronically activated switching mechanism. The tripping mechanism 21 serves to disconnect the supply voltage of the power supply 1 from the load circuit 3. The electric load current supplied from the power supply 1 via the tripping mechanism 21 is led through a zero current transformer (ZCT) 22 in order to detect an unbalanced current supplied to the load circuit 3. If the value of the unbalanced current detected by the ZCT 22 is higher than a predetermined value, the ZCT supplies a corresponding signal to an electronic control circuit (24) arranged to activate the tripping mechanism 21 so as to disconnect the supply voltage from the load circuit 3.

The control circuit 24 may be a semiconductor integrated circuit with a differential amplifying function for generating a control signal for the tripping mechanism 21. In particular, the control circuit 24 may be an earth leakage current detector which consists of a differential amplifier, a latch circuit and a voltage regulator. The control circuit 24 is connected to the secondary side of the ZCT 22. Signals amplified by the differential amplifier of the control circuit 24 may be integrated by an external capacitor and connected to the input terminal of the latch circuit with an output suitable for the characteristics of a high-speed earth leakage circuit breaker. The latch circuit keeps the output low until the input voltage reaches a fixed level, and the output becomes high when the input voltage corresponding to the leakage current exceeds the fixed level. The control circuit 24 may drive a thyristor connected to the output terminal of the latch circuit in order to activate a solenoid of the tripping mechanism 21.

According to the embodiment of the present invention shown in Fig. 1, a voltage stabilizing circuit 23 is provided in order to maintain the voltage of the power supply to the control circuit 24 within a predetermined range. In particular, the voltage stabilizing circuit 23 is arranged to generate a voltage drop substantially corresponding to a voltage increase in the power supply, such that a surge voltage is not passed to the control circuit 24. The voltage stabilizing circuit 23 may comprise any stabilizing element such as a Zener diode, varistor or other circuit element which generates an increased leakage current leading to an increased internal drop voltage required to suppress a corresponding surge voltage at the input of the voltage stabilizing circuit 23.

Accordingly, the supply voltage of the control circuit 24 is maintained within a predetermined range specified by the characteristics of the voltage stabilizing circuit 23 to thereby protect the control circuit 24 and prevent an unwanted tripping oz the tripping mechanism 21.

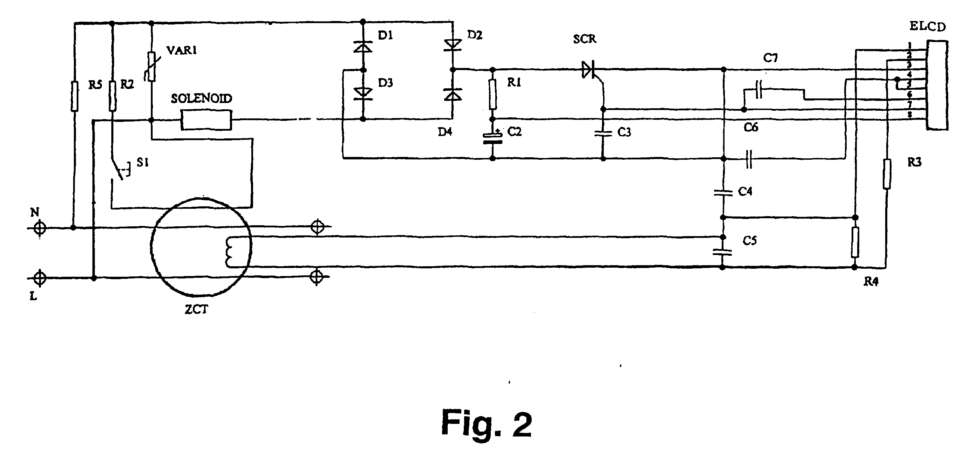

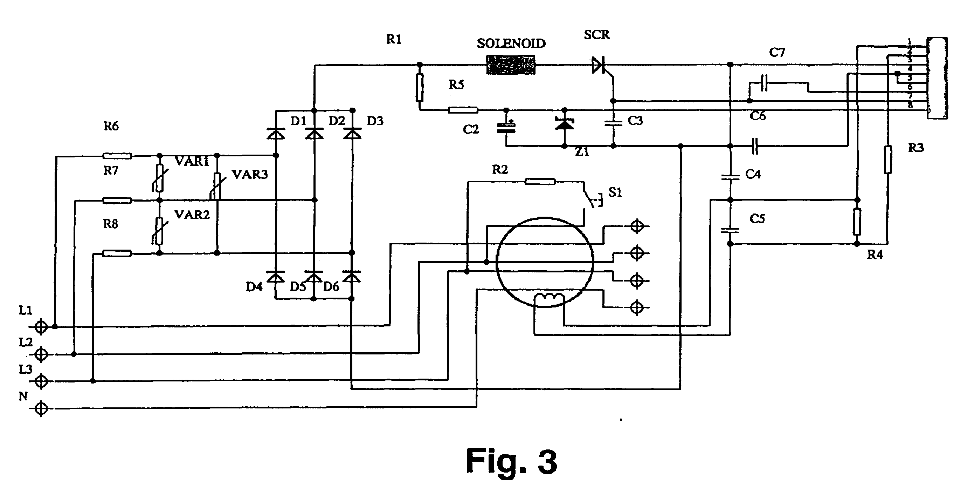

In the following, implementation examples of the preferred embodiment for a two-phase system and a three-phase system are described with reference to Figs. 2 and 3, respectively.

Fig. 2 shows a two-phase RCD, in which an earth leakage current detector (ELCD) is used in the control circuit 24. In particular, a detection voltage generated at the resistor R4 by the secondary side of the ZCT is applied at the input terminals 1 and 2 of the ELCD. Furthermore, the input terminal 3 is connected to a ground potential defined by the rectifier circuit consisting of the diodes D1 to D4. The terminal 4 of the ELCD corresponds to the output of the differential amplifier part, and the terminal 5 to the input of the latch circuit. The external capacitor C6 between terminals 4, 5 and the ground potential is used for noise removal. The internal latch circuit of the ELCD is used to inspect the output level of the amplifier part and to supply a gate current to the external thyristor (SCR) via output terminal 7. When the input voltage generated by the ZCT exceeds a predetermined value, e.g. typically 1.1 V, the latch circuit operates and supplies a gate current to the gate of the SCR via the output terminal 7. A terminal 6 is used as a noise absorption terminal to which a capacitor C7 is connected. Finally, the supply voltage of the ELCD is supplied via the rectifying circuit D1 to D4 and the resistor R1 to the terminal 8. The other capacitors C2 to C5 also serve to filter or remove any noise components in the respective input or output voltages.

In the two-pole electronic RCD shown in Fig. 2, the supply voltage between N (neutral) and L (live) is supplied via the ZCT to a load circuit (not shown). Furthermore, the supply voltage is branched off to the control circuit via a surge suppression resistor R5, a varistor VAR1 and a solenoid of the tripping mechanism to the rectifying circuit D1 to D4. The resistor R2 and the switch S1 constitute a test circuit for testing the function of the ZCT by generating an unbalanced current. The surge suppression resistor R5 and the varistor VAR1 constitute a surge protection or voltage stabilizing circuit for stabilizing or maintaining the voltage supplied to the rectifying circuit, so as to protect the ELCD. When a surge voltage arrives from L or N, the serial connection of the varistor VAR1 and the resistor R5 which preferably may be a wire-wound resistor generates a high leakage current via the varistor VAR1, since the resistance value of the varistor VAR1 decreases with increased voltage. As the increased current passes through the resistor R5, the surge voltage drops across the resistor R5 and is not passed to the supply voltage input (terminal 8) of the ELCD via the rectifying circuits D1 to D4. The resistor R1 serves to drop the rectified high voltage to provide a required supply voltage for the ELCD.

Thus, the supply voltage of the ELCD is maintained or stabilized by the serial connection of the surge suppression resistor R5 and the varistor VAR1, to thereby prevent damage or unwanted tripping.

In the untripped state, the current which passes through the solenoid is very low, since the SCR is not activated. Thus, the solenoid will not operate and will not move its core to disconnect the power supply to the load circuit.

When the current transformer ZCT detects an unbalanced current in the load supplied via N and L, the output voltage of the secondary coil of the ZCT across the load resistor R4 is input between the input terminals 1 and 2 of the ELCD. Then, the tripping mechanism is activated due to the unbalanced current detected via the ELCD, and a gate triggering voltage is supplied to the SCR via the output terminal 7 of the ELCD to thereby set the SCR into an ON stage. As a result, the impedance between the cathode and the anode of the SCR becomes low, such that a large current 10 (e.g. 1 to 1.5A) passes through the SCR and the solenoid. Then, the core in the solenoid will move to disconnect the power to the load circuit.

In the following, an electronic component list is given for the cwo-pc1E RCD shown in Fig. 2:

| Part No. | Decription: |
|---|---|
| R1 | Composition Resistor 130kΩ |
| R2 | Composition Resistor 5.6kΩ |
| R3 | Resistor 100Ω/0.5W |
| R4 | Resistor 270Ω/0.5W |
| R5 | Wire wound Resistor 20Ω/5W |
| VARI | Varistor G15 470V |
| C2 | Tantalum Capacitor. 1µF 50V |
| C3, C4, C6 | Capacitor 0.047µF 50VDC |
| C5 | Ceramic Capacitor 0.022µF |
| C7 | Metal Film Cap. 0.047µF 50V ±5% |
| D1, 02, D3, D4 | Diode IN4007 |
| SCR | Thyristor CR03AM-12 |
| ELCD | Earth Leakage Current |
| | Detector M54123L |
| SOLENOID | Solenoid assy |
| ZCT | Zero Current Transformer |

Fig. 3 shows a circuit diagram of another example of the embodiment of the present invention based on a three-phase system.

The ELCD corresponds to the ELCD shown in Fig. 2, such that a description of the control circuit and its external components will not be repeated. In the present case, the supply voltage of the ELCD is supplied via a three-phase rectifying circuit D1 to D6, wherein the solenoid is arranged in series with the SCR behind the rectifying circuit. Furthermore, an additional resistor R5 is provided in order to drop the rectified higher inter phase voltage to provide a suitable supply voltage for the ELCD. Moreover, an additional Zener diode Z1 is provided in parallel to the supply voltage of the ELCD in order to provide an additional stabilization of the DC voltage generated by the three-phase rectifying circuit D1 to 06.

The voltage supplied to the rectifying circuit Dl to D6 is supplied from the phase lines L1 to L3 via surge suppression resistors R6 to R8 and varistors VAR1 to VAR3 connected in series with the respective ones of the resistors R6 to R8 which preferably may be wire-wound resistors. Thus, any surge voltage generated on one of the phase lines L1 to L3 will lead to a current increase through the respective one of the varistors VAR1 to VRR3. The current increase will lead to an increased voltage drop across the respective one of the resistors R6 to R8, such that the high surge voltage is not passed to the control circuit ELCD via the diodes D1 to D6. Thereby, the ELCD can be protected against damage or unwanted tripping.

Additionally, the use of the three-phase rectifying circuit D1 to D6 provides the advantage that an adequate DC voltage level is supplied to the ELCD, even in case of a voltage failure of one of the phase voltages. Moreover, a failure of the neutral wire has no effect on the performance of the control circuit, since the supply voltage to the ELCO is generated only on the oasis of the three-phase wires L1 to L3. Thus, the three-phase rectifying circuit D1 to D6 constitutes an additional means to maintain or stabilize the supply voltage of the ELCD within a predetermined range.

As in the case of the two-pole RCD shown in Fig. 2, the current passing through the solenoid is low in the untripped state, where the thyristor SCR has a high impedance. Thus, the solenoid will not operate and will not move the core to disconnect the power supplied to the load circuit. When the output voltage at the secondary coil of she ZCT exceeds a predetermined value defined by the ELCD, an output signal is generated by the ELCD at the terminal 7 so as to activate the thyristor SCR to be set into a low impedance state. Then, a high current passes through the tryristor SCR and the solenoid which will disconnect the power to the load circuit )not shown).

Thus, the ELCD is protected by the respective serial connections of the surge suppression resistors R6 to R8 and the varistors VAR! to VAR3 provided for each of the three phase lines to generate a voltage drop across the surge suppression resistors R6 to R8 in case of a surge voltage. Furthermore, the three-phase rectifying diodes D1 to D6 serve to maintain the supply voltage to the ELCD even in case of a voltage failure in one of the phase lines L1 to L3.

In the following, an electronic component list of the four-pole RCD shown in Fig. 3 is given:

| Part No. | Description |
|---|---|
| R1, R3 | Composition Resistor 150kΩ, 2W |
| R2 | Composition Resistor 8.2kΩ |
| R3 | Resistor 100kΩ/0.5W |
| R4 | Resistor 270Ω/0.5W |
| R6, R7, R8 | Wire-Wound Resistor 150Ω/5W |
| VAR1, VAR2, VAR3 | Varistor G12 820V |
| C2 | Tantalum Capacitor 1 µF |
| C3, C4, C6 | Ceramic Capacitor. 0.047µF 50VDC |
| C5 | Ceramic capacitor 0.022µF |
| C7 | Metal Film Cap. 0.047µF 50V +/-5% |
| D1-D6 | Diode IN4007 |
| Z1 | Zener Diode 20V 0.5W |
| SCR | Thyristor CR03AM-12 |
| ELCD | Earth leakage current det. M54123L |
| SOLENOID | Solenoid assy |
| ZCT | Zero Current Transformer |

In summary, the present invention relates to a residual current breaker, in which an unbalanced current supplied to a load circuit is detected and a control circuit is provided to activate a tripping mechanism to disconnect the supply voltage from the load circuit. A voltage stabilizing circuit is provided so as to generate a voltage drop in case of a surge voltage of the power supply, such that the surge voltage is not passed to the control circuit. Thus, the supply voltage of the control circuit is maintained to thereby prevent damage of the control circuit and unwanted tripping.

It is to be noted that the present invention is not limited to the exemplary circuit diagrams shown in Figs. 2 and 3. As already mentioned, the voltage stabilizing circuit 23 show in Fig. 1 may be any stabilizing circuit or element suitable for generating a voltage drop in order to prevent a surge voltage at the control circuit 24.

## Claims

1. A residual current breaker comprising;
a) a tripping mechanism (21) fog disconnecting a power supply (1) from a load circuit (3);
b) a zero current transformer (22) for detecting an unbalanced current to said load circuit (3);
c) a control circuit (24) for activating said tripping mechanism (21) in response to a detection result of said zero current transformer (22);
d) a voltage stabilizing circuit (23) arranged between said power supply (1) and said control circuit (24) for maintaining a level of a voltage supplied from said power supply (1) to said control circuit (24) within a predetermined range.

2. A residual current breaker according to claim 1, wherein said voltage stabilizing circuit (23) comprises a serial connection of a resistor (R5; R6, R7, R8) and a varistor (VAR1; VAR1, VAR2, VAR3), and wherein said voltage supply to said control circuit (24) is generated across said varistor.

3. A residual current breaker according to claim 2, wherein said power supply (1) is a three-phase power supply, and said voltage stabilizing circuit (23) comprises a three-phase rectifying circuit (D1 to D6).

4. A residual current breaker according to claim 3, wherein said serial connection is provided for each phase of said three-phase power supply (1), and said voltage generated across said varistor (VAR1, VAR2, VAR3) is supplied to a respective input of said three-phase rectifying circuit (Dl to D6).

5. A residual current breaker according to any one of the preceding claims, wherein said resistor (R5; R6, R7, R8) of said serial connection is a wire-wound resistor.

6. A residual current breaker according to any one of the preceding claims, wherein said residual current breaker is 5 a residential current device.

7. A residual current breaker according to any one of the preceding claims, wherein said control circuit is an earth leakage control detector (ELCD).

8. A residual current breaker according to any one of the preceding claims, wherein said tripping mechanism is a solenoid activated by said control circuit (24) via a thyristor (SCR).
